# EUROPÄISCHE PATENTSCHRIFT

(11) **EP 2 628 610 B1**
(45) Veröffentlichungstag und Bekanntmachung des Hinweises auf die Patenterteilung: **23.07.2014**
(21) Anmeldenummer: 13002615.6
(22) Anmeldetag: 10.11.2010
(51) Int. Cl.: B44F 9/02

(54) **Verfahren zum Aufbringen eines Dekors auf eine Holzwerkstoffplatte**
Method for attaching a finish to a wooden material board
Procédé d'application d'un décor sur une plaque de matière dérivée du bois

(43) Veröffentlichungstag der Anmeldung: 21.08.2013
(62) Teilanmeldung aus: 10014439.3
(73) Patentinhaber: Flooring Technologies Ltd., Pieta PTA 9044 (MT)
(72) Erfinder: Kalwa, Norbert, 32805 Horn-Bad Meinberg (DE)
(74) Vertreter: Rehmann, Thorsten

(56) Entgegenhaltungen:
- EP-A1- 1 762 400
- EP-A1- 1 839 884
- EP-A2- 2 098 380
- US-A1- 2007 196 624

## Beschreibung

Die Erfindung betrifft ein Verfahren zum Aufbringen eines Dekors auf eine Holzwerkstoffplatte, insbesondere eine MDF- oder HDF-Platte.

Ein solches Verfahren ist beispielsweise aus der DE 10 2007 012 236 A1 bekannt. Auf die Oberfläche einer Holzwerkstoffplatte, die beispielsweise anschließend zu Fußbodenpaneelen weiterverarbeitet oder als Möbelplatte verwendet werden kann, wird zunächst eine Dekorschicht aufgebracht. Auf die Dekorschicht wird eine versiegelnde Lackschicht aufgetragen und in die vollständig ausgehärtete Lackschicht eine Struktur eingeprägt. Die Strukturierung erfolgt mit einem Prägekalandar oder einer Taktpresse unter Temperatur- und Druckbeaufschlagung. Vor dem Aufbringen der Dekorschicht auf die Oberseite der Trägerplatte kann zuvor eine Farbschicht als Trägerschicht aufgedruckt werden. Die Trägerschicht kann auch aus Papier bestehen. Bevorzugt ist das Dekor der Dekorschicht eine Holz- oder Steinreproduktion. Anstelle eines Holzdekors kann aber auch eine Kork-, Leder- oder Fliesenoptik hergestellt werden. Durch die in die Lackschicht eingeprägte Struktur, die beispielsweise zu der Maserung eines Holzdekors oder der Aderung der Steinreproduktion korrespondiert, wird eine besonders natürliche Optik der veredelten Holzwerkstoffplatte erzielt.

Aus der EP 1 918 095 A1 ist eine Holzwerkstoffplatte mit einem Kern aus Holzwerkstoff bekannt, die auf Ihrer Oberseite eine Echtholz-Furnierschicht aufweist. Die Oberfläche der Furnierschicht ist mit mindestens einem, das Dekor verändernden Farbauftrag bedruckt. Der Druck erfolgt so, dass sich das Dekor des Furnieres optisch zu einem anderen Echtholz-Dekor verändert. Die Furnierschicht kann analog und digital bedruckt werden.

Seit der Einführung des Digitaldruckes in der Holzwerkstoffindustrie werden immer mehr Produkte mit Hilfe dieser Technologie veredelt. Die Gründe dafür sind vielfältig. Der wesentliche Grund zur Anwendung des Digitaldruckes besteht darin, dass sich gegenüber analogen Druckverfahren (Tiefdruck) deutlich bessere Druckqualitäten erzielen lassen. Zum einen sind mit einem Digitaldruck höhere Auflösungen erreichbar und zum anderen ist der Digitaldruck nicht wie beispielsweise der Tiefdruck in Bezug auf die möglichen Farben eingeschränkt. Durch die Verwendung eines Digitaldruckes lassen sich folglich neue Farbräume erschließen, die mittels eines Tiefdruckverfahren nicht zugänglich sind. Im Analogdruck werden Druckwalzen mit einem Umfang von bis zu ca. 1,4m verwendet. Die Holzwerkstoffplatten können aber in jeder gewünschten Länge, und sogar endlos hergestellt werden. Durch die Beschränkung der Walzenumfänge wiederholt sich das Druckmotiv dann immer wieder. Werden die Holzwerkstoffplatten anschließend in einzelne Paneele aufgeteilt und beispielsweise als Fußbodenbelag verwendet, ergibt sich ein künstliches Dekorbild, das sich durch die Wiederholungen des Dekors an verschiedenen Stellen im Bodenbelag immer wiederfindet. Der Bodenbelag ist als "künstliches" Produkt erkennbar. Echtholzpaneele oder Natursteinfliesen weisen kein sich wiederholendes Dekor auf. Jedes Echtholz-Paneel/jede Natursteinfliese ist mit einem individuellen Dekor versehen, sodass kein Fußbodenpaneel dem anderen gleicht. Das Dekor ist zufällig über den Bodenbelag verteilt.

Im Digitaldruck können Dekore realisiert werden, die sich erst nach deutlich mehr als 40m wiederholen. Im Prinzip sind sogar Dekore gänzlich ohne Wiederholungen möglich. Auch im Hinblick auf die Farbräume stehen mit dem Digitaldruck erheblich größere Möglichkeiten als beim Analogdruck zur Verfügung. Im Digitaldruck können also Holzwerkstoffplatten veredelt werden, deren Dekor zufällig verteilt ist und wenn solche Holzwerkstoffplatten später dann zu Fußbodenbelägen weiterverarbeitet werden, wird eine zufällige Verteilung des Dekors erreicht, wie es bei Echtholz- oder Naturstein-Böden üblich ist.

Aus der EP-A-2098380 ist ein Verfahren bekannt, wobei auf ein bereits geprägtes Profil der Holzwerkstoffplatten, ein im Digitaldruck erzeugtes Dekor aufgebracht wird.

Nachteilig beim Einsatz des Digitaldruckes ist aber, dass die Druckfarben deutlich teurer sind als die Druckfarben für den Tiefdruck. Aus diesem Grund liegen die Herstellkosten digital bedruckter Holzwerkstoffplatten deutlich über denen analog bedruckter Platten. Zudem ist der Digitaldruck noch langsamer als der Tiefdruck, was ebenfalls höhere Herstellungskosten zur Folge hat.

Hiervon ausgehend soll das Verfahren zum Aufbringen eines Dekors auf die Oberseite einer Holzwerkstoffplatte, insbesondere einer MDF- oder HDF-Platte verbessert werden.

Zur Problemlösung zeichnet sich das beschriebene Verfahren dadurch aus, dass auf ein erstes im Tiefdruck erzeugtes Dekor mindestens ein zweites, im Digitaldruck erzeugtes Dekor aufgebracht wird. Durch die Kombination aus Tief- und Digitaldruck wird zunächst im klassischen Tiefdruck eine "Grundierung" aufgebracht. Bei einem Holzdekor handelt es sich dabei beispielsweise um die Farben, die für den Grundfarbton verantwortlich sind. Mit dem Digitaldruck werden anschließend die Maserung, die Astlöcher und andere dekorative Elemente auf den Tiefdruck aufgebracht. Damit ist sichergestellt, dass Dekore erzeugt werden können, die ohne sich wiederholende Bereiche gedruckt sind. Die notwendige großflächige Bedruckung erfolgt mit dem kostengünstigen Tiefdruckverfahren und die "mehr filigrane" Bedruckung mit dem teureren Digitaldruckverfahren. Da mit dem erfindungsgemäßen Verfahren der Anteil des mittels des langsameren Digitaldruckes gedruckten Dekors nur relativ gering ist, da die großfläche Bedruckung mit dem Tiefdruckverfahren erfolgt, wird im Vergleich zu einer vollständigen Bedruckung im Digitaldruck die benötigte Herstellungszeit reduziert und somit die Produktivität gesteigert. Auch dies trägt zur Kostensenkung bei.

Von besonderem Vorteil ist bei dieser Lösung, dass die beiden Druckapplikationen entweder direkt nacheinander in einer Anlage oder in zwei nacheinandergeschalteten Arbeitsprozessen aufgebracht werden können. Dies könnte beispielsweise als ein arbeitsteilig erledigter Prozess stattfinden. Der Tiefdruck könnte von einer Druckerei auf Papier erledigt werden. Das Papier wird in Rollen einem Holzwerkstoffhersteller zugeliefert, der den Digitaldruck - beispielsweise mit einem Tintenstrahldrucker - anschließend durchführt und damit eine für seine Kunden individuelle Lösung erzeugen kann. Dabei ist es nur notwendig, dass die Druckerei die Daten für den Tiefdruck dem Holzwerkstoffhersteller für seine weitere Bearbeitung zur Verfügung stellt.

Die Papierlage kann mit dem zweiten Dekor bedruckt werden, bevor sie mit der Holzwerkstoffplatte verbunden wird. Vorzugsweise wird die Papierlage mit der Holzwerkstoffplatte verpresst.

Als besonders vorteilhaft hat sich herausgestellt, wenn die Papierlage mit dem ersten Dekor als eine Rolle vorliegt. Diese wird dann "von Rolle zu Rolle" veredelt. Dabei wird das zweite Dekor mittels eines Digitaldruckers auf die bereits mit dem ersten Dekor bedruckte Papierrolle aufgedruckt. Vorzugsweise wird die Papierlage danach wieder zu einer Rolle aufgewickelt. Sie kann jedoch auch direkt weiterverarbeitet und auf die zu beschichteten Holzwerkstoffplatten aufgelegt werden. Durch diese Ausgestaltung ist es möglich, die Grundierung, also die Bedruckung der Papierlage mit der großformatigen Bedruckung im Tiefdruckverfahren, in eine externe Druckerei auszulagern. Dadurch können Herstellungskosten gesenkt werden. Die "filigrane" Bedruckung im Digitaldruck kann dann beim Veredler der Holzwerkstoffplatten selbst erfolgen. Dadurch kann eine Standardbedruckung im Tiefdruck in großem Umfang verwendet werden, ohne dass es zu Wiederholungen im Dekor der fertig veredelten Holzwerkstoffplatte kommt. Ein "random design", also eine zufällige Verteilung der einzelnen Dekorelemente, wird damit besonders einfach möglich, so dass damit eine Wiederholung im Dekor zumindest nahezu ausgeschlossen werden kann, wenn sie nicht gewünscht ist. Das Aufdrucken des zweiten Dekors im Digitaldruck wird dadurch im Vergleich zu einer Bedruckung mittels eines Bettdruckers, bei der einzelne Blätter oder Bogen der Papierlage bedruckt und dafür zunächst fixiert werden müssen, deutlich vereinfacht, wodurch die Herstellungsdauer und damit die Kosten sinken.

Die fertig bedruckte Rolle wird anschließend auf die zu veredeinde Holzwerkstoffplatte aufkaschiert. Anschließend kann sie mit einer oder mehreren Schutzschichten, beispielsweise Lackschichten, abgedeckt werden, die dann unter dem Einfluss energiereicher Strahlung, beispielsweise Elektronenstrahlen, aushärtet.

In einer besonders bevorzugten Ausführungsform werden in einer Anlage bereits fertig zugeschnittene Holzwerkstoffplatten durch unterschiedliche Geschwindigkeiten von Förderbändern zu einer "Endlosplatte" zusammengeschoben. Die einzelnen Holzwerkstoffplatten werden also so dicht hintereinander angeordnet, dass zwischen ihnen nur noch ein minimaler, vorzugsweise kein, Abstand liegt. In diesem Fall kann die mit dem zweiten Dekor und dem darunter liegenden ersten Dekor bedruckte Papierlage als "Endlos"-Rolle auf die Holzwerkstoffplatten aufgebracht werden und wird erst nach dem Aufkascchieren und Verpressen mit der Holzwerkstoffplatte auf das Maße und die Größe der Holzwerkstoffplatte zugeschnitten.Dies kann mit einer einfache Klinge, beispielsweise einem Messer, erfolgen.

Natürlich kann die Oberseite der Holzwerkstoffplatte auch unmittelbar, also ohne Papierlage, im Tiefdruck bedruckt werden und anschließend die Digitaldrucktechnik eingesetzt werden.

Vor dem analogen Aufdrucken des Dekors kann auf die Oberseite der Holzwerkstoffplatte eine Versiegelungsschicht als Grundierschicht aufgebracht werden. Hierzu kann es vorteilhaft sein, die Oberseite vor der weiteren Behandlung zu schleifen, was natürlich auch ohne zusätzliches Aufbringen der Dekorschicht vorteilhaft sein kann.

Werden die beiden Dekore unmittelbar auf die Oberseite der Platte aufgedruckt, entfällt nicht nur die bekannte, mit dem Papierwachstum verbundene Problematik, sondern auch das Handling, das mit dem Auflegen der Papierbahn auf die Plattenoberseite verbunden ist, wodurch die Herstellung vereinfacht wird.

Eine mögliche Schrittfolge für die Veredelung einer Holzwerkstoffplatte ergibt sich wie folgt:
a) Auftragen einer Versiegelungsschicht aus Melaminharz auf die Oberseite der Platte,
b) Aufdrucken eines ersten Dekors auf die Versiegelungsschicht im Tiefdruckverfahren,
c) Aufdrucken eines zweiten Dekors auf das erste Dekor mit einem Digitaldrucker,
d) Auftragen einer Schutzschicht aus Melaminharz auf beide Dekore,
e) Verpressen der Platte unter Temperatureinwirkung, bis die Schutzschicht und die Versiegelungsschicht schmelzen und sich unter Einschluss des aufgedruckten ersten und zweiten Dekors miteinander verbinden.

Durch das Aufbringen der Versiegelungsschicht auf die Oberseite der Holzwerkstoffplatte wird verhindert, dass die Druckfarbe von der Holzwerkstoffplatte aufgesaugt wird, was ohne die Versiegelungsschicht der Fall wäre, da die Holzwerkstoffplatte als solche saugfähig ist. Durch die Versiegelungsschicht wird die Dekorfarbe an der Oberfläche gehalten und gebunden, sodass die erste und zweite Dekorschicht an der Oberfläche bleiben und ein präzises, klar sichtbares Dekor ausbilden. Die Deckschicht als Schutzschicht aus Melaminharz ersetzt das bekannte Overlay, das bei den des weiteren bekannten Veredelungsverfahren auf das Dekorpapier aufgelegt wird. Durch das anschließende Verpressen unter Temperatureinwirkung bis die Schutzschicht und die Versiegelungsschicht schmelzen, wird das Dekor eingeschlossen und die Versiegelungsschicht und die Schutzschicht werden zu einem Verbund. Mit Hilfe der Presse kann der Glanzgrad der Oberfläche eingestellt werden. Wird eine polierte Pressplatte verwendet, wird eine hochglänzenden Oberfläche erzielt.

Das Dekor kann auch auf die Unterseite der Holzwerkstoffplatte aufgebracht werden.

Die Versiegelungsschichten und/oder die Schutzschichten werden vorzugsweise in mehreren Einzelschichten aufgetragen, wobei jede Einzelschicht vor dem Auftragen der nächsten Schicht ausreichend trocknet. Auch die Druckfarbe kann im Analogdruck in mehreren Schichten aufgetragen werden. Damit das Dekor bzw. die Farbschicht beim Verpressen nicht schmilzt oder sich farblich verändert, muss eine entsprechend hitzebeständige Farbe bzw. ein hitzebeständiger Lack verwendet werden. Wird die Platte vor dem Auftragen der ersten Schicht geschliffen, wird eine besonders glatte Oberfläche anschließend erzielt. In die Schutzschicht kann zur Erhöhung der Abriebfestigkeit Korund eingemischt oder eingestreut werden. Auch können antibakterielle- und/oder antistatik-Additive eingemischt oder aufgestreut werden.

Die Veredelung der Oberseite der Platte kann auch nur bereichsweise erfolgen. Im Tiefdruck wird dann die gesamte Oberseite der Holzwerkstoffplatte in der Grundfarbe bedruckt. Anschließend werden nur einzelne Bereiche im Digitaldruck behandelt. Beispielsweise bei einem Holzdekor werden die Maserung oder etwa gewünschte Astlöcher oder dergleichen im Digitaldruck aufgebracht. Damit ist es möglich, sehr kleine Losgrößen zu fertigen. Eine großformatige Holzwerkstoffplatte kann bei identischer Grundfarbe, die im Tiefdruck hergestellt wurde, mit unterschiedlichen Holzdekoren versehen werden. Aus der großformatigen Holzwerkstoffplatte können anschließend Paneele geschnitten werden, die in der Farbe identisch sind, sich in ihrem Holzdekor aber unterscheiden. So können verschiedene Holzdekore beispielsweise auch "vermischt" werden, wenn dies aus ästhetischen Gründen - beispielsweise bei der Objektgestaltung - gewünscht ist.

Außerdem ist es auch möglich, die Produktion sehr schnell umzustellen, indem ein anderes Dekor im Digitaldruck erzeugt wird, ohne die beim Tiefdruck verwendete Grundfarbe zu verändern. Die Flexibilität wird dadurch gesteigert.

Wird das erste Dekor auf eine Papierlage aufgedruckt, kann dies in einer Druckerei geschehen und dem Holzwerkstoffhersteller das Dekor als Rollen- oder Stapelware angeliefert werden. Zur Beschichtung der Holzwerkstoffplatten mit dem Dekorpapier können eine Mehrzahl einzelner Platten unmittelbar aneinander anstoßend einer Beschichtungsanlage zugeführt und das Dekorpapier von der Rolle abgezogen und aufgelegt werden. Das Bedrucken des Dekorpapiers im Tiefdruck und Digitaldruck erfolgt an sich genauso, wie zuvor bei der direkten Bedruckung der Oberseite der Holzwerkstoffplatte beschrieben. Das auf die Holzwerkstoffplatten endlos aufgelegte Dekorpapier wird dann beispielsweise mittels eines Tintenstrahldruckers mit dem zweiten Dekor bedruckt. Anschließend wird die Deckschicht flüssig aufgetragen oder in Form eines endlosen Overlaypapiers aufgebracht. Der Verbund aus Holzwerkstoffplatte, Dekorpapier und Deckschicht wird dann in einer kontinuierlichen Presse unter hohem Druck und hoher Temperatur miteinander verpresst. Es ist auch denkbar, die auf die Holzwerkstoffplatten aufgebrachten Dekor- und Decklagen am Ende der Beschichtungsanlage zwischen den einzelnen aneinander angrenzend hindurchgeführten Holzwerkstoffplatten zu durchtrennen und den Verbund dann in einer Kurztakt-Presse zu verpressen.

Ebenso ist es denkbar, das Dekor als einzelne Lage jeweils auf die Oberseite einer Holzwerkstoffplatte aufzulegen, dann das zweite Dekor im Digitaldruck aufzudrucken, mit einem bekannten Overlay abzudecken und den Verbund in einer Kurztakt-Presse zu verpressen.

Sowohl beim unmittelbaren Bedrucken der Oberseite einer Holzwerkstoffplatte als auch beim Bedrucken einer Papierlage können mehrere Digitaldrucker in Transportrichtung hintereinander angeordnet sein, um das zweite Dekor oder sogar ein weiteres oder mehrere weitere Dekore aufzudrucken. Auch können mehrere Tiefdruckeinrichtungen in Transportrichtung hintereinander vorgesehen sein, um das Dekor im Tiefdruck auf die Oberseite der Holzwerkstoffplatte aufzubringen.

## Patentansprüche

1. Verfahren zur Veredelung der Oberseite einer Holzwerkstoffplatte, insbesondere einer MDF- oder HDF-Platte mit folgenden Schritten:
a) Auftragen einer Versiegelungsschicht aus Melaminharz auf die Oberseite der Platte,
b) Aufdrucken eines ersten Dekors auf die Versiegelungsschicht im Tiefdruckverfahren,
c) Aufdrucken eines zweiten Dekors auf das erste Dekor mit einem Digitaldrucker,
d) Auftragen einer Schutzschicht aus Melaminharz auf beide Dekore,
e) Verpressen der Platte unter Temperatureinwirkung, bis die Schutzschicht und die Versiegelungsschicht schmelzen und sich unter Einschluss des aufgedruckten ersten und zweiten Dekors miteinander verbinden.

2. Verfahren nach Anspruch 1, **dadurch gekennzeichnet, dass** die Veredelung der Oberseite nur bereichsweise erfolgt.

3. Verfahren nach Anspruch 1, **dadurch gekennzeichnet, dass** in die Schutzschicht zur Erhöhung der Abriebfestigkeit Korund eingemischt oder eingestreut wird.

4. Verfahren nach Anspruch 3, **dadurch gekennzeichnet, dass** in die Schutzschicht antibakterielle- und/oder Antistatik-Additive eingemischt oder aufgestreut werden.

5. Verfahren nach einem der vorstehenden Ansprüche, **dadurch gekennzeichnet, dass** die Deckschicht eine zu dem Dekor vollständig korrespondierende Strukturprägung aufweist.

6. Verfahren nach einem der vorstehenden Ansprüche, **dadurch gekennzeichnet, dass** die beiden Druckapplikationen direkt nacheinander in einer Anlage aufgebracht werden.

7. Verfahren nach einem der vorstehenden Ansprüche 1 bis 5, **dadurch gekennzeichnet, dass** die beiden Druckapplikationen in zwei nacheinander geschalteten Arbeitsprozessen aufgebracht werden.

8. Verfahren nach Anspruch 1, **dadurch gekennzeichnet, dass** die Schutzschicht aus einem Overlay besteht, das das zweite Dekor abdeckt und der Verbund in einer Kurztakt-Presse verpresst wird.

9. Verfahren nach einem der vorstehenden Ansprüche, **dadurch gekennzeichnet, dass** beim Drucken des zweiten Dekors eine zufällige Verteilung der einzelnen Dekorelemente vorgesehen wird, sodass eine Wiederholung im Dekor nahezu ausgeschlossen werden kann, wenn sie nicht gewünscht ist.

10. Verfahren nach Anspruch 2, **dadurch gekennzeichnet, dass** im Tiefdruck ein erstes Dekor hergestellt wird und mit einer identischen Grundfarbe im Digitaldruck unterschiedliche Holzdekore bereichsweise aufgebracht werden, sodass aus der großformatigen Holzwerkstoffplatte anschließend Paneele geschnitten werden können, die in der Farbe identisch sind, sich in ihrem Holzdekor aber unterscheiden.

11. Verfahren nach Anspruch 1, **dadurch gekennzeichnet, dass** die Daten für den Tiefdruck auch für den Digitaldruck verwendet werden.

12. Verfahren nach Anspruch 1 oder 11, **dadurch gekennzeichnet, dass** die Oberseite nach dem Auftragen der Versiegelungsschicht vor der weiteren Behandlung geschliffen wird.

## Claims

1. Method for improving the upper side of a wood material board, in particular an MDF or HDF board, comprising the following steps:
a) applying a sealing layer of melamine resin to the upper side of the board,
b) printing a first decoration onto the sealing layer by the gravure method,
c) printing a second decoration onto the first decoration with a digital printer,
d) applying a protective layer of melamine resin to both decorations,
e) pressing the board under the effect of temperature, until the protective layer and the sealing layer melt and bond together while enclosing the printed-on first and second decorations.

2. Method according to Claim 1, **characterized in that** the improvement of the upper side is performed only in certain regions.

3. Method according to Claim 1, **characterized in that** corundum is mixed or scattered into the protective layer to increase the abrasion resistance.

4. Method according to Claim 3, **characterized in that** antibacterial and/or antistatic additives are mixed or scattered into the protective layer.

5. Method according to one of the preceding claims, **characterized in that** the outer layer has a structured embossing corresponding completely to the decoration.

6. Method according to one of the preceding claims, **characterized in that** the two print applications are applied directly one after the other in one installation.

7. Method according to one of preceding Claims 1 to 5, **characterized in that** the two print applications are applied in two working processes arranged one after the other.

8. Method according to Claim 1, **characterized in that** the protective layer consists of an overlay, which covers the second decoration, and the composite is pressed in a short-cycle press.

9. Method according to one of the preceding claims, **characterized in that** a random distribution of the individual decorative elements is provided during the printing of the second decoration, so that, if it is not desired, a repeat in the decoration can be virtually ruled out.

10. Method according to Claim 2, **characterized in that** a first decoration is produced in the gravure printing and different wood decorations are applied in certain regions with an identical basic colour in the digital printing, so that panels that are identical in colour but differ in their wood decoration can be subsequently cut out from the large-format wood material board.

11. Method according to Claim 1, **characterized in that** the data for the gravure printing are also used for the digital printing.

12. Method according to Claim 1 or 11, **characterized in that**, after the application of the sealing layer, the upper side is ground before further treatment.

## Revendications

1. Procédé d'amélioration d'une face supérieure d'une plaque de matière à base de bois, en particulier une plaque en MDF ou HDF, comprenant les étapes suivantes :
a) Application d'une couche de vitrification en résine de mélamine sur la face supérieure de la plaque,
b) Surimpression d'un premier décor sur la couche de vitrification par le procédé d'impression par gravure,
c) Surimpression d'un deuxième décor sur le premier décor avec une imprimante numérique,
d) Application d'une couche de protection en résine de mélamine sur les deux décors,
e) Compression de la plaque sous l'action de la température, jusqu'à ce que la couche de protection et la couche de vitrification fondent et se lient l'une à l'autre avec inclusion du premier et du deuxième décor surimprimé.

2. Procédé selon la revendication 1, **caractérisé en ce que** l'amélioration de la face supérieure s'effectue seulement par zones.

3. Procédé selon la revendication 1, **caractérisé en ce que** du corindon est mélangé ou dispersé dans la couche de protection pour augmenter la résistance à l'abrasion.

4. Procédé selon la revendication 3, **caractérisé en ce que** des additifs antistatiques et / ou antibactériens sont mélangés dans ou répandus sur la couche de protection.

5. Procédé selon l'une des revendications précédentes, **caractérisé en ce que** la couche extérieure présente une structure en relief correspondant complètement au décor.

6. Procédé selon l'une des revendications précédentes, **caractérisé en ce que** les deux applications d'impression sont appliquées directement l'une après l'autre dans un équipement.

7. Procédé selon l'une des revendications précédentes 1 à 5, **caractérisé en ce que** les deux applications d'impression sont appliquées en deux processus de travail agencés l'un après l'autre.

8. Procédé selon la revendication 1, **caractérisé en ce que** la couche de protection consiste en un recouvrement qui recouvre le deuxième décor et le composite est compressé dans une presse à cadence rapide.

9. Procédé selon l'une des revendications précédentes, **caractérisé en ce qu'**une répartition aléatoire des divers éléments décoratifs est prévue lors de l'impression du deuxième décor de sorte qu'une réitération du décors peut être presque exclue lorsque l'on ne le souhaite pas.

10. Procédé selon la revendication 2, **caractérisé en ce qu'**un premier décor est réalisé par impression par gravure et différents décors en bois sont appliqués par zones avec une couleur fondamentale identique par impression numérique, de sorte qu'à partir de plaques de matière à base de bois de grand format on peut ensuite découper dès panneaux de couleur identique mais qui diffèrent par leur décor bois.

11. Procédé selon la revendication 1, **caractérisé en ce que** les données pour l'impression par gravure sont également utilisées pour l'impression numérique.

12. Procédé selon la revendication 1 ou 11, **caractérisé en ce que** la face supérieure est rectifiée après l'application de la couche de vitrification et avant la poursuite du traitement.
